# EUROPEAN PATENT APPLICATION

(11) **EP 4 481 537 A1**
(43) Date of publication of application: **25.12.2024**
(21) Application number: 24169048.6
(22) Date of filing: 08.04.2024
(51) Int. Cl.: G06F 1/3231, G06F 1/3234, G06V 40/16

(54) **INFORMATION PROCESSING APPARATUS AND CONTROL METHOD**

(30) Priority: 22.06.2023 JP 2023102667
(71) Applicant: Lenovo (Singapore) Pte. Ltd., New Tech Park 556741 (SG)
(72) Inventor: WADA, Yuji, Yokohama-shi, 220-0012 (JP); NISHIO, Masashi, Yokohama-shi, 220-0012 (JP)
(74) Representative: Openshaw & Co.

(57) **Abstract**

The present invention is to provide an information processing apparatus to boot a system properly when a user has approached. The information processing apparatus executes user registration processing to register a user based on face information on a specific person, person detection processing to detect a face area with a face captured therein from a captured image captured by an imaging unit in order to detect the presence of a person, and user determination processing to determine whether or not a person detected by the person detection processing is the specific person registered as the user, and boots a system based on the user registration processing, the person detection processing, and the user determination processing. Further, in a state where no user is registered, the information processing apparatus sets a detection range in the person detection processing to a first detection range, and in a state where the user is registered, the information processing apparatus sets the detection range in the person detection processing to the first detection range for the specific person registered as the user, and to a second detection range different from the first detection range for a person not registered as the user.

## Description

### BACKGROUND OF THE INVENTION

### Field of the Invention

The present invention relates to an information processing apparatus and a control method.

### Description of the Related Art

There is an information processing apparatus which makes a transition to a usable state when a person approaches or to a standby state in which functions except some of the functions are stopped when the person moves away. For example, in Japanese Unexamined Patent Application Publication No. 2016-148895, it is detected whether a person is approaching or has moved away using an infrared sensor.

In recent years, with the development of computer vision and the like, detection accuracy when detecting a face from an image has been getting higher. Therefore, face detection has started to be used instead of person detection by the infrared sensor. For example, there is an information processing apparatus equipped with a function to boot a system from the standby state using face detection when a person has approached. Further, by having a function to identify each individual person, the information processing apparatus can also boot the system from the standby state when a specific person has approached.

### SUMMARY OF THE INVENTION

However, in the case of the information processing apparatus to identify each individual person and to boot the system when a specific person has approached, when several people use one information processing apparatus, such a problem arises that the system cannot be booted even if another user approaches. On the other hand, when each individual person is not identified, the system is booted in response to an unspecified number of persons such as persons who just look at the screen while passing by, resulting in consuming power wastefully.

The present invention has been made in view of the above circumstances, and it is an object thereof to provide an information processing apparatus and a control method capable of booting a system properly when a user has approached.

The present invention has been made to solve the above problem, and an information processing apparatus according to the first aspect of the present invention includes: a memory which temporarily stores data of a captured image captured by an imaging unit imaging a predetermined detection range; a first processor which executes user registration processing to register a user based on face information on a specific person, person detection processing to process the data of the captured image stored in the memory in order to detect the presence of a person by detecting a face area with a face captured therein from the captured image, and user determination processing to determine whether or not a person detected by the person detection processing is the specific person registered as the user by the user registration processing; and a second processor which boots a system based on the user registration processing, the person detection processing, and the user determination processing, wherein in a state where no user is registered by the user registration processing, the first processor sets a detection range in the person detection processing to a first detection range within the predetermined detection range, and in a state where the user is registered by the user registration processing, the first processor sets the detection range in the person detection processing to the first detection range for the specific person registered as the user, and to a second detection range different from the first detection range for a person not registered as the user.

The above information processing apparatus may be such that, in the state where no user is registered by the user registration processing, when the face area is detected from the captured image within the first detection range, the first processor determines that the detection result of the person detection processing is true, and in the state where the user is registered by the user registration processing, when the face area of the specific person is detected from the captured image within the first detection range, the first processor determines that the detection result of the person detection processing is true, or when the face area is detected from the captured image within the second detection range regardless of whether or not it is the specific person, the first processor determines that the detection result of the person detection processing is true, and the second processor boots the system based on the fact that the detection result of the person detection processing is determined to be true.

The above information processing apparatus may also be such that the detection range is a range defined by a viewing angle of the imaging unit and a distance from the imaging unit, and the second detection range is different from the first detection range in terms of at least either one of the viewing angle and the distance.

The above information processing apparatus may further be such that the detection range is a range defined by a viewing angle of the imaging unit and a distance from the imaging unit, and the second detection range is a range narrower in viewing angle than at least the first detection range.

Further, the above information processing apparatus may be such that the detection range is a range defined by a viewing angle of the imaging unit and a distance from the imaging unit, and the second detection range is a range shorter in distance than at least the first detection range.

Further, the above information processing apparatus may be such that, in the user determination processing, the first processor determines whether or not the person detected by the person detection processing is the specific person based on face information on the face area detected from the captured image by the person detection processing and the face information on the specific person registered as the user by the user registration processing.

Further, the above information processing apparatus may be such that the first processor further detects an angle of the face in the face area detected from the captured image, and in the person detection processing, the first processor sets the fact that the angle of the face in the face area is within a first angle range as one of detection conditions for the specific person registered as the user, and sets the fact that the angle of the face in the face area is within a second angle range narrower than the first angle range as one of the detection conditions for the person not registered as the user.

Further, a control method for an information processing apparatus according to the second aspect of the present invention is a control method for an information processing apparatus including: a memory which temporarily stores data of a captured image captured by an imaging unit imaging a predetermined detection range; a first processor; and a second processor, the control method including: a step of causing the first processor to perform user registration processing to register a user based on face information on a specific person; a step of causing the first processor to perform person detection processing to process the data of the captured image stored in the memory in order to detect the presence of a person by detecting a face area with a face captured therein from the captured image; a step of causing the first processor to perform user determination processing to determine whether or not a person detected by the person detection processing is the specific person registered as the user by the user registration processing; and a step of causing the second processor to boot a system based on the user registration processing, the person detection processing, and the user determination processing, wherein in a state where no user is registered by the user registration processing, the first processor sets a detection range in the person detection processing to a first detection range within the predetermined detection range, and in a state where the user is registered by the user registration processing, the first processor sets the detection range in the person detection processing to the first detection range for the specific person registered as the user, and to a second detection range different from the first detection range for a person not registered as the user.

According to the above-described aspects of the present invention, the information processing apparatus can boot the system properly when the user has approached.

### BRIEF DESCRIPTION OF THE DRAWINGS

FIG. 1 is a perspective view illustrating a configuration example of the appearance of an information processing apparatus according to a first embodiment.
FIG. 2 is a diagram illustrating an example of a person detection range of the information processing apparatus according to the first embodiment.
FIG. 3 is a diagram for describing an overview of HPD processing of the information processing apparatus according to the first embodiment.
FIG. 4 is a schematic diagram illustrating an example of a first detection range and a second detection range according to the first embodiment.
FIG. 5 is a schematic block diagram illustrating an example of the hardware configuration of the information processing apparatus according to the first embodiment.
FIG. 6 is a schematic block diagram illustrating an example of the functional configuration of the information processing apparatus according to the first embodiment.
FIG. 7 is a flowchart illustrating an example of detection range setting processing according to the first embodiment.
FIG. 8 is a flowchart illustrating an example of boot processing according to the first embodiment.
FIG. 9 is a schematic diagram illustrating an example of a first angle range and a second angle range according to a second embodiment.
FIG. 10 is a flowchart illustrating an example of face angle range changing processing according to the second embodiment.

### DETAILED DESCRIPTION OF THE INVENTION

Embodiments of the present invention will be described below with reference to the accompanying drawings.

### <First Embodiment>

First, a first embodiment of the present invention will be described.

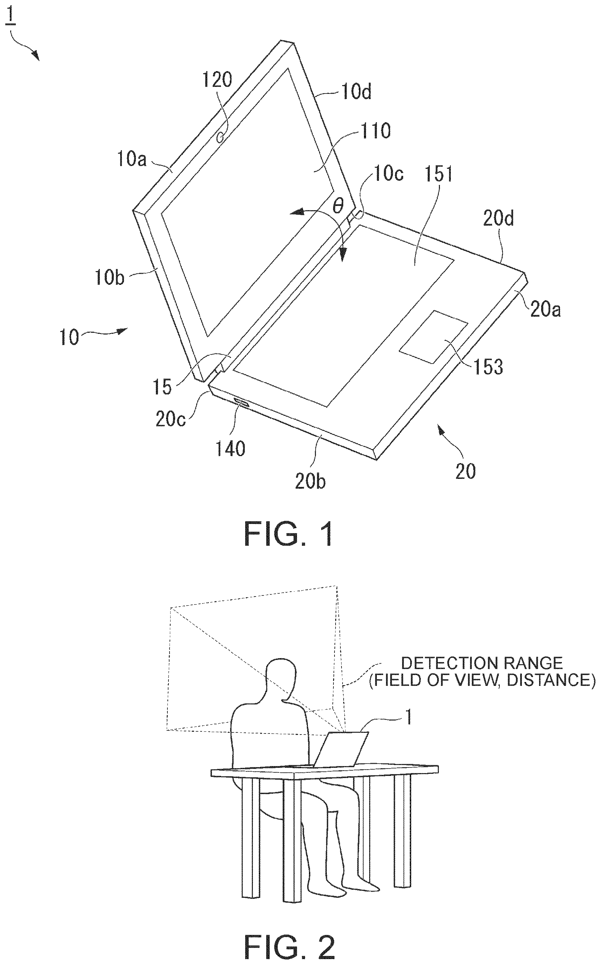

FIG. 1 is a perspective view illustrating a configuration example of the appearance of an information processing apparatus 1 according to the present embodiment.

The information processing apparatus 1 is, for example, a laptop (clamshell) PC (Personal Computer). The information processing apparatus 1 includes a first chassis 10, a second chassis 20, and a hinge mechanism 15. The first chassis 10 and the second chassis 20 are coupled by using the hinge mechanism 15. The first chassis 10 is rotatable around an axis of rotation formed by the hinge mechanism 15 relative to the second chassis 20. An open angle by the rotation between the first chassis 10 and the second chassis 20 is denoted by "θ" in FIG. 1.

The first chassis 10 is also called A cover or a display chassis. The second chassis 20 is also called C cover or a system chassis. In the following description, side faces on which the hinge mechanism 15 is provided among side faces of the first chassis 10 and the second chassis 20 are referred to as side faces 10c and 20c, respectively. Among the side faces of the first chassis 10 and the second chassis 20, faces opposite to the side faces 10c and 20c are referred to as side faces 10a and 20a, respectively. In this figure, the direction from the side face 20a toward the side face 20c is referred to as "rear," and the direction from the side face 20c to the side face 20a is referred to as "front." The right hand and left hand in the rearward direction are referred to as "right" and "left," respectively. Left side faces of the first chassis 10 and the second chassis 20 are referred to as side faces 10b and 20b, respectively, and right side faces thereof are referred to as side faces 10d and 20d, respectively. Further, a state where the first chassis 10 and the second chassis 20 overlap each other and are completely closed (a state of open angle θ = 0°) is referred to as a "closed state." The faces of the first chassis 10 and the second chassis 20 on the face-to-face sides in the closed state are referred to as respective "inner faces," and the faces opposite to the inner faces are referred to as "outer faces." Further, a state opposite to the closed state, where the first chassis 10 and the second chassis 20 are open, is referred to as an "open state."

The appearance of the information processing apparatus 1 in FIG. 1 illustrates an example of the open state. The open state is a state where the side face 10a of the first chassis 10 and the side face 20a of the second chassis 20 are separated. In the open state, the respective inner faces of the first chassis 10 and the second chassis 20 appear. The open state is one of states when a user uses the information processing apparatus 1, and the information processing apparatus 1 is often used in a state where the open angle is typically about θ = 100° to 130°. Note that the range of open angles θ to be the open state can be set arbitrarily according to the range of angles rotatable by the hinge mechanism 15, or the like.

A display unit 110 is provided on the inner face of the first chassis 10. The display unit 110 is configured to include a liquid crystal display (LCD) or an organic EL (Electro Luminescence) display, and the like. Further, an imaging unit 120 is provided in a peripheral area of the display unit 110 on the inner face of the first chassis 10. For example, the imaging unit 120 is arranged on the side of the side face 10a in the peripheral area of the display unit 110. Note that the position at which the imaging unit 120 is arranged is just an example, and it may be elsewhere as long as the imaging unit 120 can face a direction to face a display screen of the display unit 110.

In the open state, the imaging unit 120 images a predetermined imaging range in a direction to face the display screen of the display unit 110 (that is, in front of the information processing apparatus 1). The predetermined imaging range is a range of angles of view defined by an image sensor included in the imaging unit 120 and an optical lens provided in front of the imaging surface of the image sensor. For example, the imaging unit 120 can capture an image including a person (user) present in front of the information processing apparatus 1.

Further, a power button 140 is provided on the side face 20b of the second chassis 20. The power button 140 is an operating element used by the user to give an instruction to power on or power off, make a transition from a standby state to a normal operating state, make a transition from the normal operating state to the standby state, or the like. The normal operating state is an operating state of a system capable of executing processing without being particularly limited, which corresponds, for example, to S0 state defined in the ACPI (Advanced Configuration and Power Interface) specification.

The standby state is a state in which at least part of system processing is limited, which is, for example, a state lower in power consumption than the normal operating state. For example, the standby state may be a state where the display of the display unit 110 is turned off, the standby state or a sleep state, Modern Standby in Windows (registered trademark), or a state corresponding to S3 state (sleep state) defined in the ACPI specification.

Further, a keyboard 151 and a touch pad 153 are provided on the inner face of the second chassis 20 as an input device to accept user operation input. Note that a touch sensor may also be provided as the input device instead of or in addition to the keyboard 151 and the touch pad 153, or a mouse and an external keyboard may be connected. When the touch sensor is provided, an area corresponding to the display screen of the display unit 110 may be constructed as a touch panel to accept operations. Further, a microphone used to input voice may be included in the input device.

Note that in the closed state where the first chassis 10 and the second chassis 20 are closed, the display unit 110 and the imaging unit 120 provided on the inner face of the first chassis 10, and the keyboard 151 and the touch pad 153 provided on the inner face of the second chassis 20 are covered with each other's chassis faces, respectively, and put in a state of being disabled from fulfilling the functions.

The information processing apparatus 1 executes HPD (Human Presence Detection) processing to detect a person present in front of the information processing apparatus 1 based on a captured image captured by the imaging unit 120.

FIG. 2 is a diagram illustrating an example of a person detection range of the information processing apparatus 1 according to the present embodiment. In the illustrated example, a range defined by a viewing angle (FoV: Field of View) and a distance in front of the information processing apparatus 1 is a person-detectable range.

For example, the information processing apparatus 1 detects a face area with a face captured therein from a captured image captured by the imaging unit 120 to determine whether or not a person (user) is present in front of the information processing apparatus 1. The maximum value of the viewing angle in the detection range corresponds to an imaging angle of view of the imaging unit 120. The maximum value of the distance in the detection range is the maximum distance at which the face area is detectable from the captured image (a distance beyond which the face becomes too small to be detected), but the maximum distance varies depending on the resolution of the imaging unit 120. When the face area is detected from the captured image, the information processing apparatus 1 determines that the person is present. On the other hand, when no face area is detected from the captured image, the information processing apparatus 1 determines that no person is present.

The information processing apparatus 1 controls the operating state of the system of the information processing apparatus 1 depending on the presence or absence of a person by HPD processing. For example, when a person is present in front of the information processing apparatus 1, the information processing apparatus 1 controls the operating state to the normal operating state, while when no person is present in front of the information processing apparatus 1, the information processing apparatus 1 controls the operating state to the standby state.

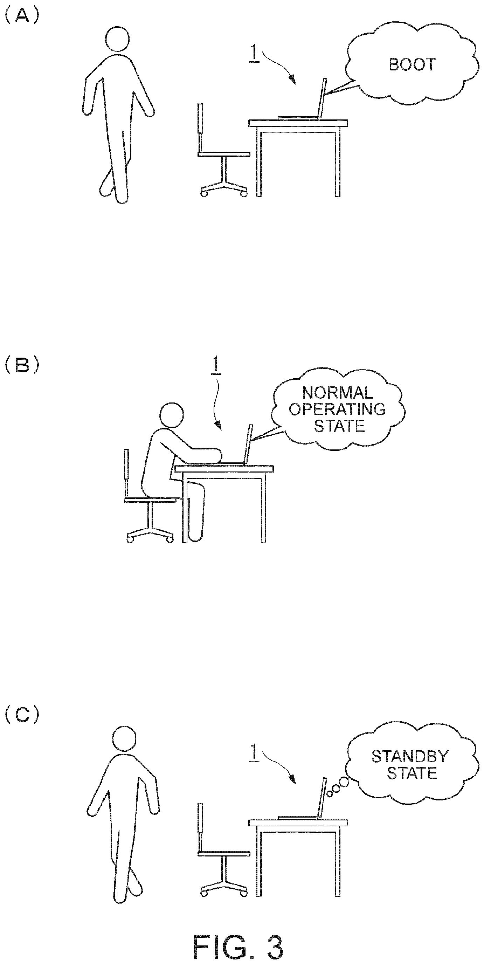

FIG. 3 is a diagram for describing an overview of the HPD processing of the information processing apparatus 1 according to the present embodiment. The information processing apparatus 1 detects a person present in front of the information processing apparatus 1 by the HPD processing, and controls the operating state of the system of the information processing apparatus 1 based on the presence or absence of a person. For example, in the standby state, when detecting a change from a state where no person is present in front of the information processing apparatus 1 (Absence) to a state where a person is present (Presence), that is, when detecting that a person has approached the information processing apparatus 1 (Approach) as illustrated FIG. 3(A), the information processing apparatus 1 automatically boots the system to make a transition to the normal operating state. Further, in a state where a person is present in front of the information processing apparatus 1 (Presence) in the normal operating state as illustrated in FIG. 3(B), the information processing apparatus 1 continues the normal operating state. Further, as illustrated in FIG. 3(C), when detecting a change from the state where the person is present in front of the information processing apparatus 1 (Presence) to the state where no person is present (Absence), that is, when detecting that the person has left the information processing apparatus 1 (Leave), the information processing apparatus 1 causes the system to make a transition to the standby state.

Further, the information processing apparatus 1 registers a specific person as a user to identify a person detected in the HPD processing in order to determine whether or not the detected person is the person registered as the user. In the user registration, face information such as a face image is registered. The information processing apparatus 1 matches both persons based on face information (for example, facial feature information) on the person detected in the HPD processing and the face information (for example, the facial feature information) on the registered person to determine whether or not the person detected in the HPD processing is the registered person.

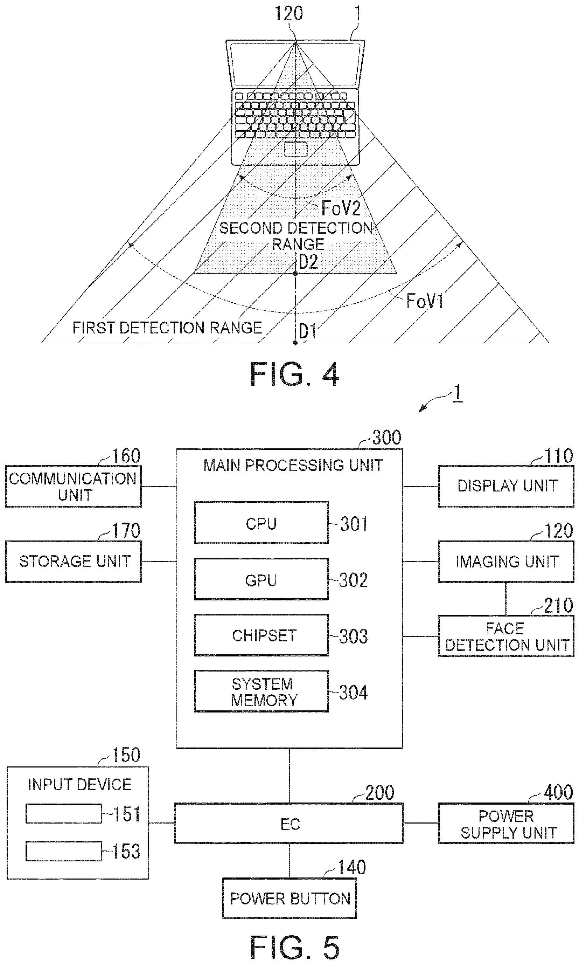

Here, the information processing apparatus 1 has a first detection range and a second detection range as detection ranges for detecting a person in the HPD processing. The first detection range and the second detection range will be described with reference to FIG. 4.

FIG. 4 is a schematic diagram illustrating an example of the first detection range and the second detection range according to the present embodiment. In the illustrated example, the first detection range is a range defined by a viewing angle FoV1 and a distance D1 from the imaging unit 120. The second detection range is a range defined by a viewing angle FoV2 and a distance D2 from the imaging unit 120. Note that although there are actually viewing angles in both the horizontal direction (yaw direction) and the vertical direction (pitch direction) of the imaging unit 120, only the viewing angles in the horizontal direction (yaw direction) are illustrated as representatives.

The second detection range is a detection range different from the first detection range, which is set, for example, to be a range narrower than the first detection range. The viewing angle FoV2 in the second detection range is a viewing angle narrower than the viewing angle FoV1 in the first detection range (FoV1 > FoV2). Further, the distance D2 in the second detection range is a distance shorter than distance D1 in the first detection range (D1 > D2). Note that the second detection range is set to be a range narrower in viewing angle and shorter in distance than the first detection range here, but the second detection range may also be set to be a range in which only the viewing angle is narrower, or to be a range in which only the distance is shorter.

The information processing apparatus 1 has two detection modes before the user registration of the specific person (that is, in a state where no user is registered) and after the user registration of the specific person (that is, in a state where the user is registered). In the following, the detection mode before the user registration of the specific person (that is, in the state where no user is registered) is called the "unregistered mode." On the other hand, the detection mode after the user registration of the specific person (that is, in the state where the user is registered) is called the "registered mode."

In the unregistered mode, the information processing apparatus 1 performs the HPD processing to detect the presence of a person using the first detection range. On the other hand, in the registered mode, the information processing apparatus 1 performs the HPD processing using the first detection range for the specific person registered as the user and using the second detection range for a person not registered as the user, respectively.

In other words, in the HPD processing, the information processing apparatus 1 sets the first detection range as the detection range of the HPD processing in the unregistered mode. On the other hand, in the registered mode, the information processing apparatus 1 sets the first detection range as the detection range of the HPD processing for the specific person registered as the user, and sets the second detection range as the detection range of the HPD processing for a person not registered as the user.

Note that the first detection range may be, for example, the entire detection range defined by the maximum value of the viewing angle (corresponding to the imaging angle of view of the imaging unit 120) and the maximum value of the distance (the maximum distance capable of detecting a face area), or may be a range narrower than the entire detection range.

The configurations of the information processing apparatus 1 according to the present embodiment will be described in detail below.

[Hardware Configuration of Information Processing Apparatus]

FIG. 5 is a schematic block diagram illustrating an example of the hardware configuration of the information processing apparatus 1 according to the present embodiment. In FIG. 5, components corresponding to respective units in FIG. 1 are given the same reference numerals. The information processing apparatus 1 is configured to include the display unit 110, the imaging unit 120, the power button 140, an input device 150, a communication unit 160, a storage unit 170, an EC (Embedded Controller) 200, a face detection unit 210, a main processing unit 300, and a power supply unit 400.

The display unit 110 displays display data (images) generated based on system processing executed by the main processing unit 300, processing of an application program running on the system processing, and the like.

For example, the imaging unit 120 includes a visible light camera (RGB camera) for capturing an image using visible light and an infrared camera (IR camera) for capturing an image using infrared light. Note that the imaging unit 120 may be configured to include either one of the visible light camera and the infrared camera, or may be configured to include both the visible light camera and the infrared camera.

The imaging unit 120 captures an image of an object within the predetermined imaging range (angle of view) in the direction (frontward) to face the inner face of the first chassis 10, and temporarily stores, in a system memory 304, image data of the captured image so that the main processing unit 300 and the face detection unit 210 can process the image data. For example, when the face detection unit 210 performs the HPD processing, the imaging unit 120 images a predetermined detection range (see FIG. 2) for detecting the presence of a person in the HPD processing. The predetermined detection range is a range including the first detection range and the second detection range illustrated in FIG. 4.

The power button 140 outputs, to the EC 200, an operation signal according to a user operation. The input device 150 is an input unit for accepting user input, which is configured to include, for example, the keyboard 151 and the touch pad 153. In response to accepting operations on the keyboard 151 and the touch pad 153, the input device 150 outputs, to the EC 200, operation signals indicative of operation contents.

The communication unit 160 is connected to other devices communicably through a wireless or wired communication network to transmit and receive various data. For example, the communication unit 160 is configured to include a wired LAN interface such as Ethernet (registered trademark), a wireless LAN interface such as Wi-Fi (registered trademark), and the like.

The storage unit 170 is configured to include storage media, such as an HDD (Hard Disk Drive) or an SDD (Solid State Drive), a RAM (Random Access Memory), a ROM (Read Only Memory), and a flash ROM. The storage unit 170 stores an OS, device drivers, various programs such as applications, and various data acquired by the operation of the programs.

The power supply unit 400 supplies power to each unit according to the operating state of each unit of the information processing apparatus 1. The power supply unit 400 includes a DC (Direct Current)/DC converter. The DC/DC converter converts the voltage of DC power, supplied from an AC (Alternate Current)/DC adapter or a battery (battery pack), to a voltage required for each unit. The power with the voltage converted by the DC/DC converter is supplied to each unit through each power system. For example, the power supply unit 400 supplies power to each unit through each power system based on a control signal input from the EC 200.

The EC 200 is a microcomputer configured to include a CPU (Central Processing Unit), a RAM (Random Access Memory), a ROM (Read Only Memory), an I/O (Input/Output) logic circuit, and the like. The CPU of the EC 200 reads a control program (firmware) prestored in the own ROM, and executes the read control program to fulfill the functionality. The EC 200 operates independently of the main system processing unit 300 to control the operation of the main processing unit 300 and manage the operating state of the main processing unit 300. Further, the EC 200 is connected to the power button 140, the input device 150, the power supply unit 400, and the like.

For example, the EC 200 communicates with the power supply unit 400 to acquire information on a battery state (remaining battery capacity, and the like) from the power supply unit 400 and to output, to the power supply unit 400, a control signal or the like in order to control the supply of power according to the operating state of each unit of the information processing apparatus 1. Further, the EC 200 acquires operation signals from the power button 140 and the input device 150, and outputs, to the main processing unit 300, an operation signal related to processing of the main processing unit 300 among the acquired operation signals.

The face detection unit 210 is configured to include a processor that executes HPD processing by face detection based on image data of a captured image captured by the imaging unit 120. The face detection unit 210 acquires the image data of the captured image captured by the imaging unit 120, and temporarily stores the acquired image data in a memory. The memory in which the image data is stored may be the system memory 304, or an unillustrated memory in the face detection unit 210.

For example, the face detection unit 210 processes the image data of the captured image acquired from the imaging unit 120 to perform face detection processing for detecting a face area with a face captured therein and a face orientation (face angle) from the captured image. Further, the face detection unit 210 performs HPD processing for detecting the presence of a person based on the detection results of the face detection processing, and the like. As the face detection method, any detection method using a face detection algorithm for detecting a face based on facial feature information, trained data (learned model) subjected to machine learning based on the facial feature information, a face detection library, or the like can be applied. Further, the face detection unit 210 registers a user based on face information on a specific person to determine whether or not a person detected by the HPD processing is the specific person registered as the user. Note that such a configuration that the face detection unit 210 performs the HPD processing by switching between the first detection range and the second detection range described with reference to FIG. 4 will be described later.

The main processing unit 300 is configured to include a CPU (Central Processing Unit) 301, a GPU (Graphic Processing Unit) 302, a chipset 303, and the system memory 304, where processing of various application programs is executable on the OS (Operating System) by system processing based on the OS.

The CPU 301 is a processor which executes processing based on a BIOS program, processing based on the OS program, processing based on application programs running on the OS, and the like. For example, the CPU 301 executes boot processing to boot the system from the standby state and make the transition to the normal operating state, sleep processing to make the transition from the normal operating state to the standby state, and the like. Note that "to boot from the standby state" can be paraphrased as "to return from the standby state to the normal operating state.

The GPU 302 is connected to the display unit 110. The GPU 302 executes image processing under the control of the CPU 301 to generate display data. The GPU 302 outputs the generated display data to the display unit 110.

The chipset 303 has a function as a memory controller, a function as an I/O controller, and the like. For example, the chipset 303 controls reading data from and writing data to the system memory 304, the storage unit 170, and the like by the CPU 301 and the GPU 302. Further, the chipset 303 controls input/output of data from the communication unit 160, the display unit 110, and the EC 200. Further, the chipset 303 has a function as a sensor hub. For example, the chipset 303 acquires the detection results of the HPD processing from the face detection unit 210, and outputs the acquired detection results to the CPU 301.

The system memory 304 is used as a reading area of a program executed by the CPU 301 and a working area to write processed data. Further, the system memory 304 temporarily stores image data of a captured image captured by the imaging unit 120.

Note that the CPU 301, the GPU 302, and the chipset 303 may be integrated as one processor, or some or each of them may be configured as an individual processor, respectively. For example, in the normal operating state, the CPU 301, the GPU 302, and the chipset 303 are all operating, but in the standby state, only at least some of the functions of the chipset 303 are operating.

### [Functional Configuration of Information Processing Apparatus]

Next, the functional configuration of the information processing apparatus 1 to perform HPD processing by switching between the first detection range and the second detection range described with reference to FIG. 4 will be described in detail.

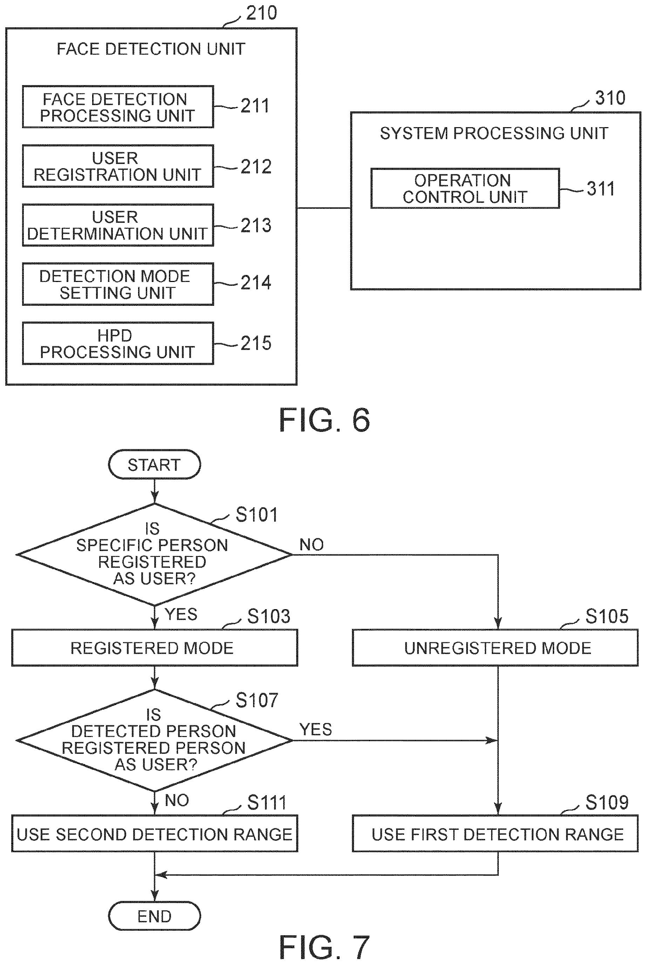

FIG. 6 is a schematic block diagram illustrating an example of the functional configuration of the information processing apparatus 1 according to the present embodiment. The information processing apparatus 1 includes the face detection unit 210 and a system processing unit 310. The face detection unit 210 corresponds to the face detection unit 210 in FIG. 5 to execute the HPD processing by face detection.

The face detection unit 210 includes a face detection processing unit 211, a user registration unit 212, a user determination unit 213, a detection mode setting unit 214, and an HPD processing unit 215.

The face detection processing unit 211 processes image data of a captured image captured by the imaging unit 120 and stored in the system memory 304 to detect a face area with a face captured therein, a face orientation (face angle), and the like from the captured image.

The HPD processing unit 215 performs HPD processing to detect the presence of a person based on the detection results by the face detection processing unit 211. For example, the HPD processing unit 215 detects the presence of a person by the face detection processing unit 211 detecting the face area from the captured image.

The user registration unit 212 performs user registration processing to register a user based on face information on a specific person. The specific person registered as the user is a user officially registered as the user authorized to use the information processing apparatus 1. For example, the user registration can be performed using a user registration function by a predetermined application running on the OS. A person who wants to be registered as the user enters a captured image with an own face captured therein using the user registration function, or captures an own face by the imaging unit 120 using the user registration function and inputs the captured image using the user registration function. Then, the user registration unit 212 performs user registration based on the input face image (face information) of the person. For example, the user registration unit 212 stores a user ID of the person who registered as the user in association with the face information.

Note that, when performing user registration of the specific person, the user registration unit 212 may perform user registration by automatically learning using a face image in a face area detected by the face detection processing unit 211. For example, the user registration unit 212 may perform user registration by automatically learning a face image, triggered to boot up each time the system is booted up, as a face image of a specific person to be registered as the user.

The user determination unit 213 performs user determination processing to determine whether or not a person detected by the HPD processing is the specific person registered as the user by the user registration processing. For example, the user determination unit 213 determines whether or not the person detected by the HPD processing is the specific person registered as the user by the user registration processing based on the face information on the face image in the face area detected from the captured image by the HPD processing, and face information on the face image of the specific person registered as the user by the user registration processing.

When no user is registered by the user registration unit 212 (before user registration), the detection mode setting unit 214 sets the mode to the unregistered mode. On the other hand, when the user is registered by the user registration unit 212 (after user registration), the detection mode setting unit 214 sets the mode to the registered mode. For example, when the detection mode setting unit 214 sets the mode to the unregistered mode, the detection range in the HPD processing is set to the first detection range, while when the detection mode setting unit 214 sets the mode to the registered mode, the detection range in the HPD processing is set to the first detection range for the specific person registered as the user, or the detection range in the HPD processing is set to the second detection range for a person not registered as the user.

In the unregistered mode, when the face area is detected from the captured image within the first detection range, the HPD processing unit 215 determines that the detection result of the HPD processing is "True." On the other hand, in the unregistered mode, when no face area is detected from the captured image within the first detection range, the HPD processing unit 215 determines that the detection result of the HPD processing is "False."

Further, in the registered mode, when the face area of the specific person registered as the user is detected from the captured image within the first detection range, the HPD processing unit 215 determines that the detection result of the HPD processing is "True." Further, when the face area is detected from the captured image within the second detection range regardless of whether or not it is the specific person, the HPD processing unit 215 determines that the detection result of the HPD processing is "True."

On the other hand, in the registered mode, when no face area of the specific person registered as the user is detected from the captured image within the first detection range and no face area is detected from the captured image within the second detection range regardless of whether or not it is the specific person, the HPD processing unit 215 determines that the detection result of the HPD processing is "False."

Then, the HPD processing unit 215 outputs, to the system processing unit 310, information indicative of the detection result of the HPD processing ("True" or "False").

The system processing unit 310 is a functional component implemented by the CPU 301 executing the BIOS and OS programs or a program running on the OS. For example, the system processing unit 310 includes an operation control unit 311 as a functional component implemented by executing the OS program.

The operation control unit 311 controls the operating state of the system. For example, when the power button 140 is operated in the standby state, the operation control unit 311 boots the system from the standby state based on an operation signal acquired from the power button 140 through the EC 200. Further, the operation control unit 311 performs processing such as system shutdown, transition to the standby state, reboot, or the like based on an operation on a power menu (shutdown, sleep, reboot, or the like) of the OS displayed on the display unit 110 in the normal operating state.

Further, the operation control unit 311 controls the operating state of the system based on the detection result of the HPD processing ("True" or "False") output from the face detection unit 210. For example, when information indicative of "True" as the detection result of the HPD processing is acquired from the face detection unit 210 in the standby state, the operation control unit 311 boots the system from the standby state. In other words, the operation control unit 311 boots the system based on the user registration processing, the HPD processing, and the user determination processing in the face detection unit 210.

### [Operation of Detection Range Setting Processing]

Referring next to FIG. 7, the operation of detection range setting processing to set the detection range used in the HPD processing to the first detection range or the second detection range depending on whether or not the information processing apparatus 1 is in the unregistered mode or the registered mode will be described. FIG. 7 is a flowchart illustrating an example of detection range setting processing according to the present embodiment.

(Step S101) The face detection unit 210 determines whether or not the specific person is registered as the user. When determining that the specific person is registered as the user (YES), the face detection unit 210 sets the mode to the registered mode (step S103), and proceeds to a process in step S107. On the other hand, when determining that the specific person is not registered as the user (NO), the face detection unit 210 sets the mode to the unregistered mode (step S105), and proceeds to a process in step S109.

(Step S107) The face detection unit 210 determines whether or not a person detected by the HPD processing is the specific person registered as the user by the user registration processing. For example, the user determination unit 213 determines whether or not the person detected by the HPD processing is the specific person registered as the user based on the face information on the face image in the face area detected from the captured image by the HPD processing, and the face information on the face image of the specific person registered as the user by the user registration processing. When determining that the detected person is the specific person (YES), the face detection unit 210 proceeds to the process in step S109. On the other hand, when determining that the detected person is not the specific person (NO), the face detection unit 210 proceeds to a process in step S111.

(Step S109) The face detection unit 210 sets the detection range in the HPD processing to the first detection range. In other words, in the case of the unregistered mode, the face detection unit 210 performs the HPD processing using the first detection range. Further, in the case of the registered mode, the face detection unit 210 performs the HPD processing using the first detection range for the specific person registered as the user.

(Step S111) The face detection unit 210 sets the detection range in the HPD processing to the second detection range. In other words, in the case of the registered mode, the face detection unit 210 performs the HPD processing using the second detection range for a person not registered as the user.

### [Operation of Boot Processing]

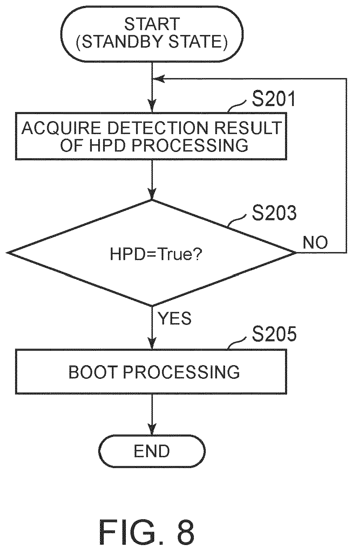

Referring next to FIG. 8, the operation of boot processing in which the information processing apparatus 1 boots the system based on the detection result of the HPD processing will be described. FIG. 8 is a flowchart illustrating an example of boot processing according to the present embodiment. Here, it is assumed that the system is in the standby state.

(Step S201) The system processing unit 310 acquires the detection result of the HPD processing from the face detection unit 210. Then, the system processing unit 310 proceeds to a process in step S203.

(Step S203) The system processing unit 310 determines whether or not the detection result of the HPD processing is "True" (HPD = True?). When the detection result of the HPD processing is "False," the system processing unit 310 determines that the detection result of the HPD processing is not "True" (NO), and the system processing unit 310 returns to the process in step S201. On the other hand, when determining that the detection result of the HPD processing is "True" (YES), the system processing unit 310 proceeds to a process in step S205.

(Step S205) The system processing unit 310 executes the boot processing to boot the system.

### [Summary of First Embodiment]

As described above, the information processing apparatus 1 according to the present embodiment includes: a memory (for example, the system memory 304) which temporarily stores image data of a captured image captured by the imaging unit 120 imaging a predetermined detection range (for example, the range defined by the viewing angle (FoV) and the distance illustrated in FIG. 2); the face detection unit 210 (an example of a first processor); and the CPU 301 (an example of a second processor). The face detection unit 210 executes user registration processing to register a user based on face information on a specific person, HPD processing (person detection processing) to process the image data of the captured image stored in the system memory 304 in order to detect the presence of a person by detecting a face area with a face captured therein from the captured image, and user determination processing to determine whether or not a person detected by the HPD processing is the specific person registered as the user by the user registration processing. The CPU 301 boots the system based on the user registration processing, the HPD processing, and the user determination processing executed by the face detection unit 210. Then, in a state where no user is registered by the user registration processing (for example, in the unregistered mode), the face detection unit 210 sets the detection range in the HPD processing to the first detection range within the detection range imaged by the imaging unit 120. On the other hand, in a state where the user is registered by the user registration processing (for example, in the registered mode), the face detection unit 210 sets the detection range in the HPD processing to the first detection range for the specific person and to the second detection range different from the first detection range for a person not registered as the user. The second detection range is a range in which at least either one of the viewing angle of the imaging unit 120 and the distance from the imaging unit 120 is different from that in the first detection range, which is, for example, a range in which either one or both of the viewing angle and the distance are narrower (shorter) than those in the first detection range.

Thus, upon booting the system by the HPD processing in the state where the user is registered, since the information processing apparatus 1 performs the HPD processing in a wider detection range for the specific person registered as the user and performs the HPD processing in a narrower detection range for a person not registered as the user, the information processing apparatus 1 can boot the system in response to the approach of a person likely to be the user, and hence can prevent the system from being booted in response to an unspecified number of persons such as persons who just look at the screen while passing by. Thus, the information processing apparatus 1 can boot the system properly when the user has approached. Note that since the information processing apparatus 1 performs the HPD processing in the wider detection range in the state where no user is registered, dissatisfaction due to difficulty in booting the system with default specifications can be reduced.

For example, in the unregistered mode, when the face area is detected from the captured image within the first detection range, the face detection unit 210 determines that the detection result of the HPD processing is "True." Further, in the registered mode, when the face area of the specific person registered as the user is detected from the captured image within the first detection range, the face detection unit 210 determines that the detection result of the HPD processing is "True," and when the face area is detected from the captured image within the second detection range regardless of whether or not it is the specific person, the face detection unit 210 determines that the detection result of the HPD processing is "True." Then, the CPU 301 boots the system based on the fact that the detection result of the HPD processing is determined to be "True."

Thus, the information processing apparatus 1 can boot the system in response to the approach of a person likely to be the user, and hence can prevent the system from being booted in response to an unspecified number of persons such as persons who just look at the screen while passing by. Therefore, the information processing apparatus 1 can boot the system properly when the user has approached. Note that since the information processing apparatus 1 performs the HPD processing in the wider detection range in the state where no user is registered, dissatisfaction due to difficulty in booting the system with default specifications can be reduced.

The detection range imaged by the imaging unit 120 is a range defined by the viewing angle of the imaging unit 120 and the distance from the imaging unit 120. Then, the second detection range is a range narrower in viewing angle than at least the first detection range.

Thus, since the information processing apparatus 1 does not boot the system unless a person not registered as the user comes closer to the front position than the person registered as the user, the information processing apparatus 1 can prevent the system from being booted in response to persons who just walk on the side while passing by. Therefore, the information processing apparatus 1 can boot the system properly when the user has approached.

The detection range imaged by the imaging unit 120 is a range defined by the viewing angle of the imaging unit 120 and the distance from the imaging unit 120. Then, the second detection range is a range shorter in distance than at least the first detection range.

Thus, since the information processing apparatus 1 does not boot the system unless a person not registered as the user comes closer than the person registered as the user, the information processing apparatus 1 can prevent the system from being booted in response to persons who just walk nearby while passing by. Therefore, the information processing apparatus 1 can boot the system properly when the user has approached.

Further, in the user determination processing, the face detection unit 210 determines whether or not the person detected by the HPD processing is the specific person based on the face information on the face area detected from the captured image by the HPD processing, and the face information on the specific person registered as the user by the user registration processing.

Thus, the information processing apparatus 1 can determine whether or not the person detected by the HPD processing is the specific person registered as the user depending on the face, and can change the detection range properly between the detection range of the HPD processing for the person not registered as the user and the detection range of the HPD processing for the person registered as the user, respectively.

Further, a control method according to the present embodiment is a control method for the information processing apparatus 1 including: a memory (for example, the system memory 304) which temporarily stores image data of a captured image captured by the imaging unit 120; the face detection unit 210 (the example of the first processor); and the CPU 301 (the example of the second processor), the control method including: a step of causing the face detection unit 210 to perform user registration processing to register a user based on face information on a specific person; a step of causing the face detection unit 210 to perform HPD processing (person detection processing) to process the image data of the captured image stored in the system memory 304 in order to detect the presence of a person by detecting a face area with a face captured therein from the captured image; a step of causing the face detection unit 210 to perform user determination processing to determine whether or not the person detected by the HPD processing is the specific person registered as the user by the user registration processing; and a step of causing the CPU 301 to boot a system based on the user registration processing, the HPD processing, and the user determination processing executed by the face detection unit 210. Then, in a state where no user is registered by the user registration processing (for example, in the unregistered mode), the face detection unit 210 sets a detection range in the HPD processing to a first detection range within a detection range imaged by the imaging unit 120. On the other hand, in a state where the user is registered by the user registration processing (for example, in the registered mode), the face detection unit 210 sets the detection range in the HPD processing to the first detection range for the specific person registered as the user, and to a second detection range different from the first detection range for a person not registered as the user.

Thus, upon booting the system by the HPD processing in the state where the user is registered, since the information processing apparatus 1 performs the HPD processing in a wider detection range for the specific person registered as the user and performs the HPD processing in a narrower detection range for a person not registered as the user, the information processing apparatus 1 can boot the system in response to the approach of a person likely to be the user, and hence can prevent the system from being booted in response to an unspecified number of persons such as persons who just look at the screen while passing by. Therefore, the information processing apparatus 1 can boot the system properly when the user has approached. Note that since the information processing apparatus 1 performs the HPD processing in the wider detection range in the state where no user is registered, dissatisfaction due to difficulty in booting the system with default specifications can be reduced.

### <Second Embodiment>

Next, a second embodiment of the present invention will be described.

In the first embodiment, the configuration in which the detection range of the HPD processing is different between the specific person registered as the user and a person not registered as the user in the registered mode is described. However, a face angle detection condition for determining that a person is present in the HPD processing may further be differentiated. For example, the information processing apparatus 1 according to the present embodiment determines that a person is present (HPD = True) only when the person not registered as the user is facing more forward than the specific person registered as the user. Thus, when the person not registered as the user has approached, the information processing apparatus 1 can boot the system only when the person can be determined to be more likely to be the user.

Note that, since the basic configurations of the information processing apparatus 1 according to the present embodiment are the same as the configurations according to the first embodiment illustrated from FIG. 1 to FIG. 6, the description thereof will be omitted. Here, such a configuration that a face angle is further set as one of detection conditions in the HPD processing in the registered mode (in the state where the user is registered) will be described.

The face detection processing unit 211 of the face detection unit 210 detects an angle of a face in a face area detected from a captured image. The angle of the face here is a rotation angle of the face, for example, in the yaw direction (left and right direction) or the pitch direction (up and down direction). For example, in addition to simple pattern matching with the face image, the face detection processing unit 211 extracts landmark positions, such as left eye, right eye, nose, mouth, and chin of the face, to detect the angle of the face from the relationship among these landmark positions.

Then, in the HPD processing (person detection processing), the HPD processing unit 215 sets the fact that the angle of the face in the face area is within a first angle range as one of detection conditions for the specific person registered as the user, and sets the fact that the angle of the face in the face area is within a second angle range narrower than the first angle range as one of the detection conditions for a person not registered as the user.

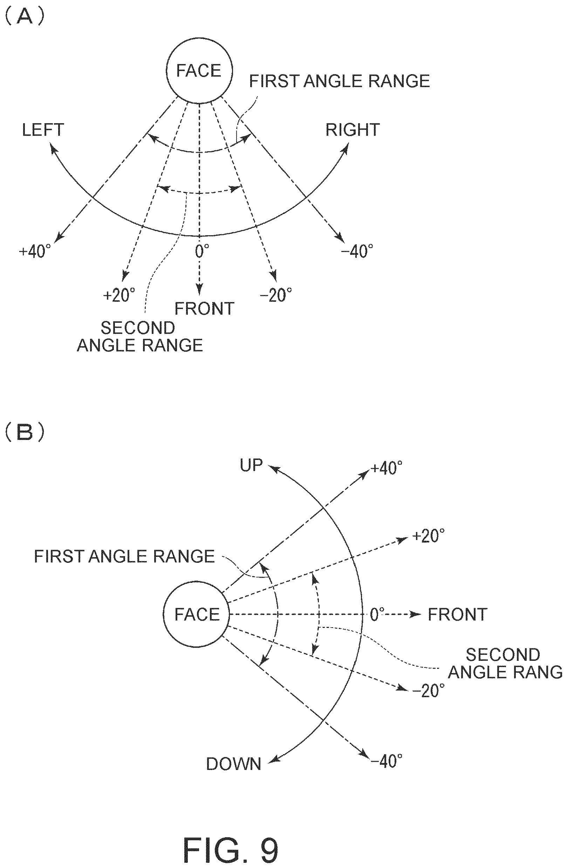

FIG. 9 is a schematic diagram illustrating an example of the first angle range and the second angle range according to the present embodiment. FIG. 9(A) illustrates angles of a face in the yaw direction when viewing the face from above, and FIG. 9(B) illustrates angles of the face in the pitch direction when viewing the face from the side. Here, an angle of the face in the yaw direction, at which the face is facing forward toward the display unit 110, is set to "0°," angles to the left toward the face are set as positive(+) angles, and angles to the right are set as negative(-) angles. Further, an angle of the face in the pitch direction, at which the face is facing forward toward the display unit 110, is set to "0°," angles in the upward direction toward the face are set as positive(+) angles, and angles in the downward direction are set as negative(-) angles.

In the illustrated example, the first angle range is set to ±40° in the yaw direction and to ±40° in the pitch direction. The second angle range narrower than the first angle range is set to ±20° in the yaw direction and to ±20° in the pitch direction. In other words, for the specific person registered as the user, the HPD processing unit 215 determines that the detection result of the HPD processing is "True" as such a detection condition that the angle of the face is within a range of ±40° in the yaw direction and ±40° in the pitch direction. On the other hand, for a person not registered as the user, the HPD processing unit 215 determines that the detection result of the HPD processing is "True" as a detection condition that the angle of the face is within a range of ±20° in the yaw direction and ±20° in the pitch direction. In other words, for the person not registered as the user, the HPD processing unit 215 determines that the detection result of the HPD processing is "True" only when the face is facing more forward than the face of the specific person registered as the user.

### [Operation of Face Angle Range Changing Processing]

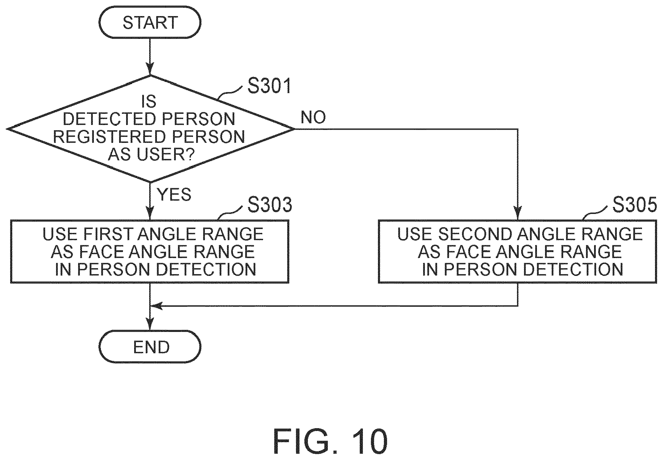

Referring next to FIG. 10, the operation of face angle range changing processing in which the information processing apparatus 1 changes the face angle range used in the HPD processing between the specific person registered as the user and a person not registered as the user in the registered mode will be described. FIG. 10 is a flowchart illustrating an example of face angle range changing processing according to the present embodiment.

(Step S301) The face detection unit 210 determines whether or not a person detected by the HPD processing is the specific person registered as the user by the user registration processing. For example, the user determination unit 213 determines whether or not the person detected by the HPD processing is the specific person registered as the user by the user registration processing based on face information on a face image in a face area detected from a captured image by the HPD processing, and face information on a face image of the specific person registered as the user by the user registration processing. When determining that the person is the specific person (YES), the face detection unit 210 proceeds to a process in step S303. On the other hand, when determining that the person is not the specific person (NO), the face detection unit 210 proceeds to a process in step S305.

(Step S303) The face detection unit 210 sets the face angle range used in the HPD processing to the first angle range. In other words, for the specific person registered as the user, the face detection unit 210 sets the fact that the angle of the face in the face area is within the first angle range (for example, within the range of ±40° in the yaw direction and ±40° in the pitch direction) in the HPD processing (person detection processing) as one of detection conditions for determining that the detection result of the HPD processing is "True."

(Step S305) The face detection unit 210 sets the face angle range used in the HPD processing to the second angle range narrower than the first angle range. In other words, for the person not registered as the user, the face detection unit 210 sets the fact that the angle of the face in the face area is within the second angle range (for example, within the range of ±20° in the yaw direction and ±20° in the pitch direction) in the HPD processing (person detection processing) as one of the detection conditions for determining that the detection result of the HPD processing is "True."

### [Summary of Second Embodiment]

As described above, in the information processing apparatus 1 according to the present embodiment, the face detection unit 210 (the example of the first processor) detects an angle of a face in a face area detected from a captured image. Then, for the specific person registered as the user, the face detection unit 210 sets the fact that an angle of the face in the face area is within a first angle range in the HPD processing (person detection processing) as one of detection conditions for determining that the detection result of the HPD processing is "True," and for a person not registered as the user, the face detection unit 210 sets the fact that the angle of the face in the face area is within a second angle range narrower than the first angle range as one of the detection conditions for determining that the detection result of the HPD processing is "True."

Thus, for the person not registered as the user, the information processing apparatus 1 determines that the person is a person who can use the information processing apparatus 1 only when the person is facing more forward than the specific person registered as the user, and hence can boot the system. Therefore, the information processing apparatus 1 can boot the system properly when the person who can use the information processing apparatus 1 has approached.

While the embodiments of this invention have been described in detail above with reference to the accompanying drawings, the specific configurations are not limited to those in the embodiments described above, and design changes are also included without departing from the scope of this invention. For example, the respective components described in the above-described embodiments can be combined arbitrarily.

Further, the configuration example in which the imaging unit 120 is built in the information processing apparatus 1 is described, but the present invention is not limited to this example. For example, the imaging unit 120 does not have to be built in the information processing apparatus 1, which may also be attachable to the information processing apparatus 1 (for example, onto any one of the side faces 10a, 10b, 10c, and the like) and communicably connected to the information processing apparatus 1 wirelessly or by wire as an external accessory of the information processing apparatus 1.

Further, in the aforementioned embodiments, the example in which the face detection unit 210 is provided separately from the CPU 301 and the chipset 303, but some or all of the functions of the face detection unit 210 may be provided in the chipset 303, or may be provided in a processor integrated with the CPU 301 or the chipset 303. For example, the CPU 301, the chipset 303, and the face detection unit 210 may be configured as individual processors, or configured to be integrated as one processor. Further, some or all of the functions of the face detection unit 210 may be provided in the EC 200.

Further, a hibernation state, a power-off state, and the like may be included as the standby state described above. The hibernation state corresponds, for example, to S4 state defined in the ACPI specification. The power-off state corresponds, for example, to S5 state (shutdown state) defined in the ACPI specification. Note that the standby state, the sleep state, the hibernation state, the power-off state, and the like as the standby state are states lower in power consumption than the normal operating state (states of reducing power consumption).

Note that the information processing apparatus 1 described above has a computer system therein. Then, a program for implementing the function of each component included in the information processing apparatus 1 described above may be recorded on a computer-readable recording medium so that the program recorded on this recording medium is read into the computer system and executed to perform processing in each component included in the information processing apparatus 1 described above. Here, the fact that "the program recorded on the recording medium is read into the computer system and executed" includes installing the program on the computer system. It is assumed that the "computer system" here includes the OS and hardware such as peripheral devices and the like. Further, the "computer system" may also include two or more computers connected through networks including the Internet, WAN, LAN, and a communication line such as a dedicated line. Further, the "computer-readable recording medium" means a storage medium such as a flexible disk, a magneto-optical disk, a portable medium like a flash ROM or a CD-ROM, or a hard disk incorporated in the computer system. Thus, the recording medium with the program stored thereon may be a non-transitory recording medium such as the CD-ROM.

Further, a recording medium internally or externally provided to be accessible from a delivery server for delivering the program is included as the recording medium. Note that the program may be divided into plural pieces, downloaded at different timings, respectively, and then united in each component included in the information processing apparatus 1, or delivery servers for delivering respective divided pieces of the program may be different from one another. Further, it is assumed that the "computer-readable recording medium" includes a medium on which the program is held for a given length of time, such as a volatile memory (RAM) inside a computer system as a server or a client when the program is transmitted through a network. The above-mentioned program may also be to implement some of the functions described above. Further, the program may be a so-called differential file (differential program) capable of implementing the above-described functions in combination with a program(s) already recorded in the computer system.

Further, some or all of the functions of the information processing apparatus 1 in the embodiments described above may be realized as an integrated circuit such as LSI (Large Scale Integration). Each function may be implemented by a processor individually, or some or all of the functions may be integrated as a processor. Further, the method of circuit integration is not limited to LSI, and it may be realized by a dedicated circuit or a general-purpose processor. Further, if integrated circuit technology replacing the LSI appears with the progress of semiconductor technology, an integrated circuit according to the technology may be used.

Further, the information processing apparatus 1 of the embodiments mentioned above is not limited to the laptop PC, which may be, for example, a desktop PC or the like.

### Description of Symbols

- 1: information processing apparatus
- 10: first chassis
- 20: second chassis
- 15: hinge mechanism
- 110: display unit
- 120: imaging unit
- 140: power button
- 150: input device
- 151: keyboard
- 153: touch pad
- 160: communication unit
- 170: storage unit
- 200: EC
- 210: face detection unit
- 211: face detection processing unit
- 212: user registration unit
- 213: user determination unit
- 214: detection mode setting unit
- 215: HPD processing unit
- 300: main processing unit
- 301: CPU
- 302: GPU
- 303: chipset
- 304: system memory
- 310: system processing unit
- 311: operation control unit
- 400: power supply unit

## Claims

1. An information processing apparatus comprising:
a memory arranged to temporarily store data of a captured image captured by an imaging unit imaging a predetermined detection range;
a first processor arranged to execute user registration processing to register a user based on face information on a specific person, person detection processing to process the data of the captured image stored in the memory in order to detect presence of a person by detecting a face area with a face captured therein from the captured image, and user determination processing to determine whether or not a person detected by the person detection processing is the specific person registered as the user by the user registration processing; and
a second processor arranged to boot a system based on the user registration processing, the person detection processing, and the user determination processing, wherein
in a state where no user is registered by the user registration processing, the first processor is arranged to set a detection range in the person detection processing to a first detection range within the predetermined detection range, and
in a state where the user is registered by the user registration processing, the first processor is arranged to set the detection range in the person detection processing to the first detection range for the specific person registered as the user, and is arranged to set a second detection range different from the first detection range for a person not registered as the user.

2. The information processing apparatus according to claim 1, wherein
in the state where no user is registered by the user registration processing, when the face area is detected from the captured image within the first detection range, the first processor is arranged to determine that the detection result of the person detection processing is true,
in the state where the user is registered by the user registration processing, when the face area of the specific person is detected from the captured image within the first detection range, the first processor is arranged to determine that the detection result of the person detection processing is true, or when the face area is detected from the captured image within the second detection range regardless of whether or not it is the specific person, the first processor is arranged to determine that the detection result of the person detection processing is true, and
the second processor is arranged to boot the system based on a fact that the detection result of the person detection processing is determined to be true.

3. The information processing apparatus according to claim 1 or 2, wherein
the detection range is a range defined by a viewing angle of the imaging unit and a distance from the imaging unit, and
the second detection range is different from the first detection range in terms of at least either one of the viewing angle and the distance.

4. The information processing apparatus according to any preceding claim, wherein
the detection range is a range defined by a viewing angle of the imaging unit and a distance from the imaging unit, and
the second detection range is a range narrower in viewing angle than at least the first detection range.

5. The information processing apparatus according to any preceding claim, wherein
the detection range is a range defined by a viewing angle of the imaging unit and a distance from the imaging unit, and
the second detection range is a range shorter in distance than at least the first detection range.

6. The information processing apparatus according to any preceding claim, wherein in the user determination processing, the first processor is arranged to determine whether or not the person detected by the person detection processing is the specific person based on face information on the face area detected from the captured image by the person detection processing and the face information on the specific person registered as the user by the user registration processing.

7. The information processing apparatus according to any preceding claim, wherein
the first processor is arranged to further detect an angle of the face in the face area detected from the captured image, and
in the person detection processing, the first processor is arranged to set a fact that the angle of the face in the face area is within a first angle range as one of detection conditions for the specific person registered as the user, and is arranged to set the fact that the angle of the face in the face area is within a second angle range narrower than the first angle range as one of the detection conditions for the person not registered as the user.

8. A control method for an information processing apparatus, the apparatus including: a memory arranged to temporarily store data of a captured image captured by an imaging unit imaging a predetermined detection range; a first processor; and a second processor, the control method comprising:
causing the first processor to perform user registration processing to register a user based on face information on a specific person;
causing the first processor to perform person detection processing to process the data of the captured image stored in the memory in order to detect presence of a person by detecting a face area with a face captured therein from the captured image;
causing the first processor to perform user determination processing to determine whether or not a person detected by the person detection processing is the specific person registered as the user by the user registration processing; and
causing the second processor to boot a system based on the user registration processing, the person detection processing, and the user determination processing, wherein
in a state where no user is registered by the user registration processing, the first processor is arranged to set a detection range in the person detection processing to a first detection range within the predetermined detection range, and
in a state where the user is registered by the user registration processing, the first processor is arranged to set the detection range in the person detection processing to the first detection range for the specific person registered as the user, and is arranged to set a second detection range different from the first detection range for a person not registered as the user.

9. The control method according to claim 8, comprising:
in the state where no user is registered by the user registration processing, when the face area is detected from the captured image within the first detection range, causing the first processor to determine that the detection result of the person detection processing is true,
in the state where the user is registered by the user registration processing, when the face area of the specific person is detected from the captured image within the first detection range, causing the first processor to determine that the detection result of the person detection processing is true, or when the face area is detected from the captured image within the second detection range regardless of whether or not it is the specific person, causing the first processor to determine that the detection result of the person detection processing is true, and
booting the system based on a fact that the detection result of the person detection processing is determined to be true.

10. The control method according to claim 8 or 9, wherein
the detection range is a range defined by a viewing angle of the imaging unit and a distance from the imaging unit, and
the second detection range is different from the first detection range in terms of at least either one of the viewing angle and the distance.

11. The control method according to any of claims 8 to 10, wherein
the detection range is a range defined by a viewing angle of the imaging unit and a distance from the imaging unit, and
the second detection range is a range narrower in viewing angle than at least the first detection range.

12. The control method according to any of claims 8 to 11, wherein
the detection range is a range defined by a viewing angle of the imaging unit and a distance from the imaging unit, and
the second detection range is a range shorter in distance than at least the first detection range.

13. The control method according to any of claims 8 to 12, comprising, in the step of user determination processing, causing the first processor to determine whether or not the person detected by the person detection processing is the specific person based on face information on the face area detected from the captured image by the person detection processing and the face information on the specific person registered as the user by the user registration processing.

14. The control method according to any of claims 8 to 13, comprising
causing the first processor to detect an angle of the face in the face area detected from the captured image, and,
in the person detection processing step, causing the first processor to set a fact that the angle of the face in the face area is within a first angle range as one of detection conditions for the specific person registered as the user, and causing the first processor to set the fact that the angle of the face in the face area is within a second angle range narrower than the first angle range as one of the detection conditions for the person not registered as the user.
